# EUROPÄISCHE PATENTSCHRIFT

(11) **EP 1 808 402 B1**
(45) Veröffentlichungstag und Bekanntmachung des Hinweises auf die Patenterteilung: **09.11.2011**
(21) Anmeldenummer: 06026849.7
(22) Anmeldetag: 23.12.2006
(51) Int. Cl.: B66F 9/075, B60K 7/00, B62B 3/06

(54) **Niederhubwagen**
Pallet truck
Chariot élévateur à petite levée

(30) Priorität: 14.01.2006 DE 20600552 U
(43) Veröffentlichungstag der Anmeldung: 18.07.2007
(73) Patentinhaber: Jungheinrich Aktiengesellschaft, 22047 Hamburg (DE)
(72) Erfinder: Hüther, Sebastian, 24668 Kaltenkirchen (DE)
(74) Vertreter: Hauck Patent- und Rechtsanwälte

(56) Entgegenhaltungen:
- US-A- 2 734 752

## Beschreibung

Die Erfindung bezieht sich auf einen Niederhubwagen nach dem Oberbegriff des Anspruchs 1.

Niederhubwagen als Flurförderzeuge weisen typischerweise ein Lastteil und ein Antriebsteil auf. Das Lastteil enthält ein Lasttragmittel, zumeist in Form von zwei parallel beabstandeten Radarmen, die an den vorderen Enden über Lasträder abgestützt sind. Die Lasträder sind in Schwingen gelagert, die mit Hilfe eines Gestänges beim Anheben der Radarme verschwenkt werden können um einen vorgegebenen relativ kleinen Hub. Das Lastteil ist an dem Antriebsteil geführt und wird mit Hilfe einer Hydraulik-Zylinder-Anordnung im Antriebsteil um den beschriebenen Hub angehoben, wobei ein mit den Antriebsteil gekoppeltes Gestänge dafür sorgt, daß mit dem Gestänge in den Radarmen bei einem Anheben der Radarme gleichzeitig die Schwinge der Lasträder ausgefahren wird.

Es ist bekannt, derartige Niederhubwagen als Mitgehfahrzeuge auszuführen und zur Lenkung eine Deichsel zu verwenden. Die Deichsel ist um eine horizontale und eine vertikale Achse schwenkbar gelagert und mit der Antriebseinheit in Triebverbindung, welche um eine vertikale Achse im Rahmen des Antriebsteils schwenkbar gelagert ist. Die Antriebseinheit treibt das Antriebsrad, das gleichzeitig das gelenkte Rad ist. Es ist bekannt, daß gelenkte Rad entweder mittig auf der Längsachse anzuordnen oder auch zu dieser seitlich versetzt. Ein Hydraulikaggregat versorgt die Hubzylinder-anordnung mit Hydraulikmedium. Der Antriebsmotor ist batteriebetrieben, und die Anordnung der Batterie ist in einem Batteriegehäuse vorgesehen, wobei bekannt ist, daß Batteriegehäuse als Teil des Lastteils auszubilden und bei einem Hub des Lastteils gleichzeitig mit anzuheben. Üblicherweise sitzt die Batterie auf der den Radarmen zugekehrten Seite des Antriebsteils, wodurch die Länge des Fahrzeugs unabhängig von den Radarmen durch die Länge des Antriebsteils und des Batteriegehäuses bestimmt wird.

Die Antriebseinheit ist häufig derart ausgeführt, daß der Antriebsmotor auf der Oberseite eines Lagerbauteils angeordnet ist, mit dem das Antriebsrad im Rahmen um die vertikale Achse drehbar gelagert ist. Die Kopplung zwischen dem Antriebsmotor und der Achse des Rades erfolgt über ein Winkelgetriebe. Aus DE 103 34 937 A1 ist auch bekannt, einen Radnabenantriebsmotor zu verwenden. Ein Radnabenantriebsmotor verringert den Aufwand für ein Getriebe.

Aus DE 197 00 272 A1 ist bekannt geworden, bei einem deichselgeführten Flurförderzeug einen Batterieblock zwischen dem lenkbaren Antriebsrad und einem in Querrichtung des Flurförderzeugs beabstandet angeordneten zweiten Rad anzuordnen. Das Antriebsrad ist hierbei außermittig angeordnet. Mit Hilfe des bekannten Flurförderzeugs soll eine höhere Steifigkeit sowie in Längsrichtung eine geringe Abmessung erzielt werden. Bei einem derartigen Flurförderzeug ist die Deichsel ebenfalls außermittig angeordnet. Das bekannte Flurförderzeug betrifft jedoch keinen Niederhubwagen, sondern einen Hochhubwagen mit einem Hubgerüst.

Aus US 2 734 752 ist ein Niederhubwagen gemäß dem Oberbegriff des Anspruchs 1 bekannt geworden, bei dem das Antriebsteil einen schwenkbaren Rahmen aufweist. Das Lastteil ist über Arme am Rahmen mittig angelenkt. Hydraulikzylinder unterhalb des schwenkbaren Rahmens drücken unmittelbar über ein Gestänge die Lastarme nach oben. Die Kolbenstangen der Zylinder betätigen einen Winkelhebel, der über eine Rolle an der Unterseite der Lastarme angreift. In Gehäusen oberhalb der Antriebseinheit für das lenkbare Antriebsrad befinden sich eine Batterie und die Hydraulik.

Der Erfindung liegt die Aufgabe zugrunde, einen deichselgeführten Niederhubwagen zu schaffen, der ohne zusätzlichen Bauaufwand eine besonders kleine Abmessung in Achsrichtung aufweist.

Diese Aufgabe wird durch die Merkmale des Patentanspruchs 1 gelöst.

Beim erfindungsgemäßen Niederhubwagen ist der Antriebsmotor in an sich bekannter Weise ein Radnabenmotor. Das Batteriegehäuse ist mit dem Lastteil verbunden.

Bei dem erfindungsgemäßen Niederhubwagen wird die Länge des Fahrzeugs abgesehen von den Radarmen im wesentlichen durch die Länge des Gehäuse für die Batterie bestimmt. Eine gewisse Länge wird noch benötigt für die Anbringung der Deichsel. Auf diese Weise wird ein besonders kurzes Flurförderzeug erzielt. Alternativ ist jedoch auch möglich, die Deichsel an der Oberseite des Batteriegehäuses anzulenken, wodurch die Länge dieses Fahrzeugbereichs noch weiter verringert wird.

Durch die Anordnung der relativ hochliegenden Batterie verlagert sich der Fahrzeugschwerpunkt nach oben, was eine stärkere Kippneigung zur Folge hat. Dieser Nachteil kann aber durch eine moderne Fahrwerksabstimmung ohne weiteres kompensiert werden. Bei der Erfindung ist vorgesehen, daß zwei Hubzylinder an der der Deichsel zugekehrten Außenseite des Batteriegehäuses an jeweils einem Ende der Außenseite angeordnet sind. Die seitlich angeordneten Hydraulikzylinder haben den Vorteil, daß die Deichsel bauraumoptimiert mittig auf der Fahrquerachse angreifen kann. Die Lenkübersetzung kann so ausgelegt werden, daß die Deichsel nur einen geringen Lenkanschlag ausführen muß, um einen maximalen Lenkausschlag des gelenkten Rades zu bewerkstelligen. Der Lenkanschlag ist durch die seitlichen Hubzylinder begrenzt.

Die Kolbenstange der Hydraulikzylinder weist nach unten und ist fest mit dem Rahmen des Antriebsteils verbunden sind, während die Zylindermäntel mit dem Batteriegehäuse verbunden sind und das Hydraulikaggregat ebenfalls außen am Batteriegehäuse angebracht ist nahe einem der beiden Hydraulikzylinder. Dadurch kann mit einem Hydraulikzylinder eine unmittelbare Verbindung mit dem Hydraulikaggregat erfolgen, ohne die Zwischenschaltung einer Leitung. Der andere Hydraulikzylinder muß über eine Hydraulikleitung versorgt werden, die jedoch keiner Bewegung ausgesetzt ist und somit fest verlegt werden kann.

Bei dem erfindungsgemäßen Niederhubwagen kann nach einer Ausgestaltung der Erfindung die Antriebseinheit auf der Längsachse des Niederhubwagens angeordnet sein.

Nach einer weiteren Ausgestaltung der Erfindung ist vorgesehen, daß die vertikale Schwenkachse der Deichsel annähernd in der Ebene liegt, welche durch die Längsachse des Niederhubwagens geht.

Zwischen der Deichsel bzw. ihrer Schwenklagerung und einem Lagerbauteil für das Antriebsrad ist ein geeignetes Getriebe vorgesehen, um eine Schwenkung der Antriebseinheit zu bewirken. Hierzu sieht eine Ausgestaltung der Erfindung vor, daß mit der Achse des Schwenklager der Deichsel ein erstes Kettenrad und auf dem Lagerbauteil der Antriebseinheit ein zweites Kettenrad angebracht ist und sich um beide Kettenräder eine Kette schlingt. Das Verhältnis der Zähne der Kettenräder bestimmt somit die Lenkübersetzung.

Es sind Gabelhubwagen bekannt geworden, die sowohl einen Radarmhub als auch einen Masthub aufweisen. Dies bedeutet, daß neben dem Radarmen, die einen sogenannten Freihub ausführen können, ein weiteres Lasttragmittel vorgesehen ist, das mit Hilfe eines mehr oder weniger hohen Mastes geführt werden kann, um eine Last auf eine größere Höhe anzuheben, als dies mit dem Freihub der Fall ist. Dadurch kann das zweite Lasttragmittel Stapelaufgaben übernehmen. Das erfindungsgemäße Flurförderzeug kann auch als ein Hubwagen mit Stapelfunktion ausgestattet sein. Eine Ausgestaltung der Erfindung sieht daher vor, daß seitliche Mastprofile vorgesehen sind für die Führung und Betätigung eines weiteren Lasttragmittels, wobei Antriebsmittel, z.B. Hubzylinder, für das zweite Lasttragmittel ebenfalls seitlich angeordnet sind. Auch hierbei läßt sich durch die Erfindung die Gesamtlänge des Flurförderzeugs reduzieren.

Die Erfindung soll nachfolgend anhand von Zeichnungen näher beschrieben werden, in denen ein Ausführungsbeispiel dargestellt ist.
- Figur 1: zeigt schematisch die Seitenansicht eines Niederhubwagens nach der Erfindung.
- Figur 2: zeigt die Draufsicht des Niederhubwagens nach Figur 1.
- Figur 3: zeigt die Rückansicht des Niederhubwagens nach Figur 1.

- Figur 4: zeigt eine ähnliche Ansicht wie Figur 3, teilweise aufgeschnitten.
- Figur 5: zeigt eine ähnlich Darstellung wie Figur 2, jedoch mit teilweise aufgebrochenem Abschnitt.
- Figur 6: zeigt einen Schnitt durch Figur 5 entlang der Linie 6-6.
- Figur 7: zeigt schematisch einen Niederhubwagen mit einem Hubgerüst für ein zweites Lasttragmittel

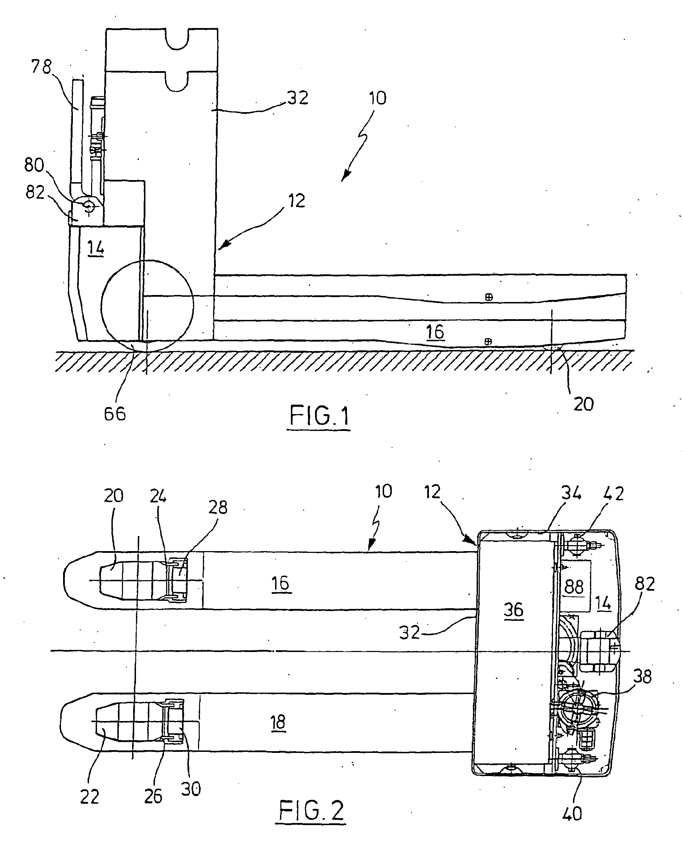

In den Figuren ist ein Niederhubwagen 10 dargestellt mit einem Lastteil 12 und einem Antriebsteil 14. Das Lastteil weist zwei Radarme 16, 18 auf, welche an den vorderen Enden Lasträder 20, 22 aufweisen, die in Schwingen 24, 26 gelagert sind. Die Schwingen sind, wie in Figur 2 zu erkennen, mit jeweils einer Stange 28 bzw. 30 gekoppelt zur Verschwenkung der Schwinge und damit zum Ausfahren der Lasträder 20, 22. Mit den Radarmen 16, 18 ist ein Gehäuse 32 verbunden, das im oberen Bereich ein Batteriegehäuse 34 bildet zur Aufnahme einer Batterie 36.

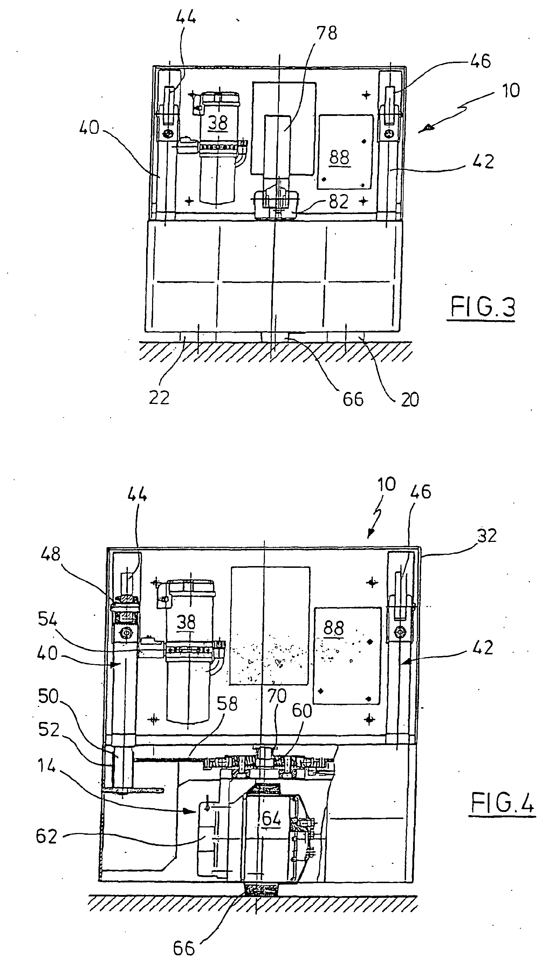

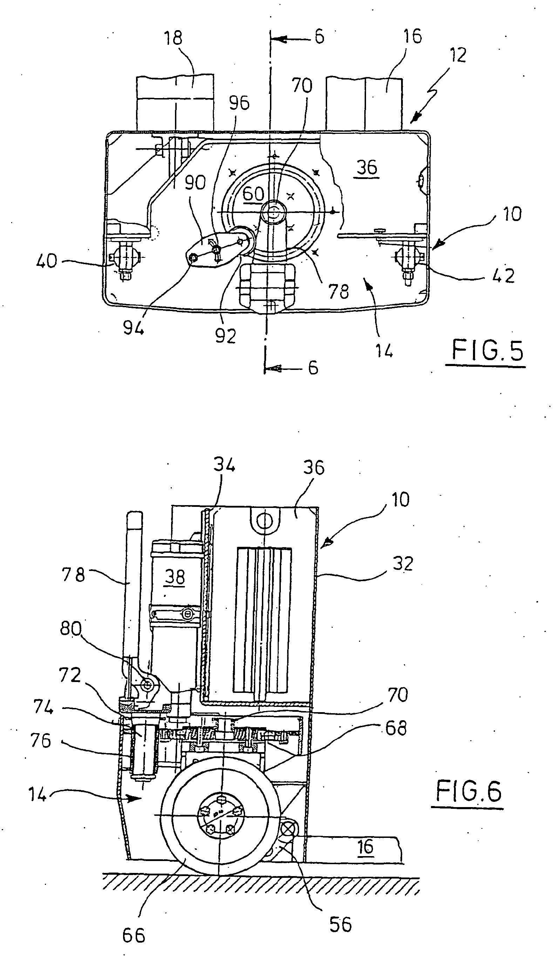

An der Rückwand des Batteriegehäuses 34 ist seitlich versetzt zur Längsachse ein Hydraulikaggregat 38 fest angebracht. Wie aus den Figuren 3 und 4 hervorgeht, sind an der Rückwand des Batteriegehäuses 34 zwei vertikale Hydraulikzylinder 40, 42 angeordnet. Der Zylindermantel der Hydraulik-zylinder 40, 42 weist nach oben und ist an jeweils einer Konsole 44 bzw. 46 an der Rückwand des Batteriegehäuses 34 über einen Bolzen 48 angelenkt. Bei 50 ist die Kolbenstange des Hydraulikzylinders 40 zu erkennen, der fest in eine Hülse 52 sitzt, die im nicht weiter beschriebenen Rahmen des Antriebsteils 14 befestigt ist. Das Hydraulikaggregat 38 liegt nahe dem Zylinder 40, so daß eine unmittelbare Verbindung 54 ohne eine Zwischenleitung stattfinden kann. Der Hydraulikzylinder 42 ist über eine feste Leitung mit dem Hydraulikaggregat 42 verbunden. Werden die Hydraulikzylinder 40, 42 ausgefahren, hebt sich das Gehäuse 32 insgesamt zusammen mit den Radarmen 16, 18. Über ein nicht näher dargestelltes Gestänge, das lediglich bei 56 in Figur 6 angedeutet ist, sind die Stangen 28, 30 in den Radarmen 16, 18 mit dem Antriebsteil gekoppelt. Dadurch werden die Stangen 28, 30 betätigt und fahren die Lasträder 20, 22 aus; diese bleiben mit fortschreitendem Hub der Radarme 16, 18 in Bodenkontakt und stützen diese ab.

Wie aus den Figuren 4, 5 und 6 hervorgeht, ist in einer Platte 58 des Rahmens des Antriebsteils 14 ein Lagerbauteil 60 um eine vertikale Achse drehbar gelagert. Das Lagerbauteil 60 weist einen nach unten stehenden Lagerschenkel 62 auf, an dem zusammen mit einem Radnabenmotor 64 ein Antriebsrad 66 gelagert ist. Es liegt annähernd auf der Längsachse des Niederhubwagens 10. Ein Radnabenmotor ist an sich bekannt und soll daher nicht näher beschrieben werden.

Ein Kettenrad 70 ist mittig in einer Öffnung des Lagerbauteils 60 drehfest angeordnet. Ein weiteres Kettenrad 72 sitzt drehfest auf einem Zapfen 74, der in einer Hülse 76 drehbar gelagert ist, die fest mit dem Rahmen des Antriebsteil 14 verbunden ist. Der Zapfen 74 bildet ein Lagerbauteil für eine bei 78 angedeutete Deichsel, die um einen horizontalen Zapfen 80 auch horizontal beweglich gelagert ist. Über die Kettenräder 70, 72 ist eine Kette 78 geschlungen (siehe Figur 5), wodurch bei einer Verschwenkung der Deichsel 78 um die vertikale Achse das Antriebsrad 66 verschwenkt wird. Der Lagerbock für den horizontalen Zapfen 80 ist mit 82 bezeichnet. Er sitzt auf einem Absatz des Gehäuses für das Antriebsteil 14.

Auf der von der Deichsel 78 aus gesehen rechten Seite der Rückwand des Batteriegehäuses 34 ist ein Kasten 88 angeordnet, der eine Steuervorrichtung enthält.

In Figur 5 ist ein Hebel 90 zu erkennen, der an einem Ende ein Rad 92 lagert und am anderen Ende bei 94 schwenkbar ist, um mit Hilfe des Rades 92 eine Spannung auf die Kette 78 aufzubringen. Die Winkelstellung des Hebels 90 wird durch eine Schraube 96 festgelegt, die in einem Bogenschlitz des Hebels 90 sitzt.

Insbesondere aus der Darstellung nach Figur 1 ist ersichtlich, daß die Länge des Niederhubwagens im wesentlichen durch die Länge des Batteriegehäuses 32, 34 bestimmt ist. Die Batterie liegt annähernd mittig in Höhe der Querachse des Fahrzeugs, die in einer Ebene liegt, die durch die Achse des Antriebsrades 66 geht. Die Breite der Batterie bzw. des Batteriegehäuses 34 erstreckt sich über die gesamte Breite des Antriebsteils. Der maximale Schwenkwinkel der Deichsel 78 wird bestimmt durch die Lage der Hubzylinder 40, 42, ist jedoch als ausreichend zu betrachten, insbesondere wenn eine ausreichende Übersetzung über die Kettenräder 70, 72 erfolgt.

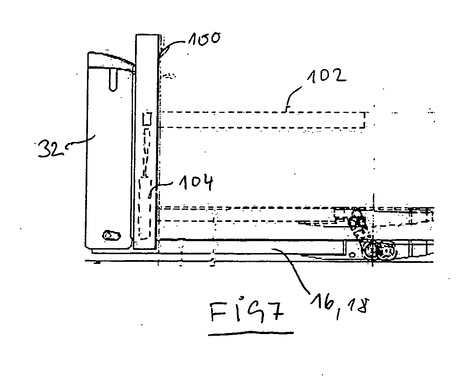

In Fig. 7 ist zu erkennen, daß an den Seiten des Gehäuses 32 ein Hubgerüst 100 für eine Lastgabel 102 angebracht ist. Die Lastgabel 102 wird von Hubzylindern betätigt, die bei 104 gestrichelt angedeutet sind. Diese Betätigung ist herkömmlich. Die Radarme 16, 18 sind in angehobener Stellung gestrichelt gezeichnet.

## Patentansprüche

1. Niederhubwagen, mit
- einem Lastteil (12), das ein Lasttragmittel aufweist und über eine Hubzylinderanordnung und ein Gestänge für Lasträder (20, 22) des Lasttragmittels mit einen Antriebsteil (14) gekoppelt ist,
- einem gelenkten Antriebsrad (66), das mit einem Antriebsmotor (64) eine Antriebseinheit bildet, die vom Rahmen des Antriebsteil (14) um eine vertikale Achse drehbar gelagert ist,
- einer im Antriebsteil (14) um eine horizontale und eine vertikale Achse schwenkbare Deichsel (78), die mit der Antriebseinheit (14) in Triebverbindung steht,
- einem Hydraulikaggregat (38) für die Hydraulik-Hubzylinder-Anordnung und
- einem Batteriegehäuse oberhalb der Antriebseinheit, wobei
der Antriebsmotor ein Radnabenmotor (64) ist, **dadurch gekennzeichnet, daß** das Batteriegehäuse mit dem Lastteil (12) verbunden ist, zwei Hubzylinder (40, 42) an der der Deichsel (78) zugekehrten Außenseite des Batteriegehäuses (34) an jeweils einem Ende der Außenseite vorgesehen sind und die Kolbenstange (50) der Hubzylinder (40, 42) nach unten weist und fest mit dem Rahmen des Antriebsrades (40) verbunden sind, während die Zylindermäntel mit dem Batteriegehäuse (34) verbunden sind und das Hydraulikaggregat (38) ebenfalls an den Batteriegehäuse (34) angebracht ist nahe einem der beiden Hubzylinder (40, 42).

2. Niederhubwagen nach Anspruch 1, **dadurch gekennzeichet daß** die Antriebseinheit auf der Längsachse des Niederhubwagens angeordnet ist.

3. Niederhubwagen nach Anspruch 1 oder 2, **dadurch gekennzeichnet, daß** die vertikale Schwenkachse der Deichsel (78) annähernd in einer Ebene liegt, die durch die Längsachse des Niederhubwagens geht.

4. Niederhubwagen nach einem der Ansprüche 1 bis 3, **dadurch gekennzeichnet, daß** auf der Achse der Schwenklager der Deichsel (78) ein erstes Kettenrad (72) sitzt und ein zweites Kettenrad (70) auf einem Zapfen sitzt, der unverdrehbar in einer mittigen Öffnung eines Lagerbauteils (60) für die Antriebseinheit sitzt und eine Antriebskette (78) um die Kettenräder (72, 70) geschlungen ist.

5. Niederhubwagen nach einem der Ansprüche 1 bis 4, **dadurch gekennzeichnet, daß** seitliche Mastprofile für ein Hubgerüst (100) vorgesehen sind für die Führung und Betätigung eines weiteren Lasttragmittels, wobei Antriebsmittel, für das zweite Lasttragmittel ebenfalls seitlich angeordnet sind.

6. Niederhubwagen nach Anspruch 5, **dadurch gekennzeichnet, dass** die Antriebsmittel für das weitere Lasttragmittel Hubzylinder (104) sind.

## Claims

1. Low lift truck, with
- a load part (12), which has a load carrying means and is coupled with a drive part (14) via a lift cylinder arrangement and a bar linkage for load wheels (20, 22) of the load carrying means,
- a steered drive wheel (66), which forms with a drive motor (64) a drive unit, which is rotatably bearing mounted around a vertical axis by the frame of the drive part (14),
- a drawbar (78), pivotable in the drive part (14) around a horizontal and a vertical axis, which is in a driving connection with the drive unit (14),
- an hydraulic power pack (38) for the hydraulic lift cylinder arrangement, and
- a battery casing disposed above the drive unit, wherein the drive motor is a wheel hub motor (64) **characterised in that** the battery casing is connected with the load part (12),
two lift cylinders (40, 42) are provided on that outer side of the battery casing (34) which faces the drawbar (78) at each one end of the outer side at a time and the piston rods (50) of the lift cylinders (40, 42) point to the downside and are fixedly connected with the frame of the drive wheel (40), while the cylinder shells are connected with the battery casing (34) and the hydraulic power pack (38) is also attached to the battery casing (34) in the vicinity of one of the two lift cylinders (40, 42).

2. Low lift truck according to claim 1, **characterised in that** the drive unit is disposed on the longitudinal axis of the low lift truck.

3. Low lift truck according to claim 1 or 2, **characterised in that** the vertical pivot axis of the drawbar (78) is approximately in a plane which runs through the longitudinal axis of the low lift truck.

4. Low lift truck according to any one of claims 1 to 3, **characterised in that** a first sprocket wheel (72) sits on the axis of the rocker pivots of the drawbar (78) and a second sprocket wheel (70) sits on a spigot, which in turn sits unrotatably in a central opening of a bearing assembly part (60) for the drive unit, and a drive chain (78) is wound around the sprocket wheels (72, 70).

5. Low lift truck according to any one of claims 1 to 4, **characterised in that** lateral mast profile structures for a mast structure (100) are provided for the guidance and actuation of another load carrying means, wherein drive means for the second load carrying means are also laterally disposed.

6. Low lift truck according to claim 5, **characterised in that** the drive means for the other load carrying means are lifting cylinders (104).

## Revendications

1. Chariot élévateur à petite levée, avec
• une partie de charge (12) qui a un moyen porte-charge et est accouplée à une partie d'entraînement (14) via un ensemble de vérin de levage et une timonerie pour des roues de charge (20, 22) du moyen porte-charge,
• une roue motrice dirigée (66) qui forme avec un moteur d'entrainement (64) une unité d'entrainement qui est logée par le cadre de la partie d'entrainement (14) de façon rotative autour d'un axe vertical,
• un timon (78), pivotant autour d'un axe horizontal et un axe vertical dans la partie d'entrainement (14) et étant en connexion d'entrainement avec l'unité d'entrainement (14),
• une unité hydraulique (38) pour la disposition unité hydraulique-vérin de levage et
• un boîtier de batterie au-dessus de l'unité d'entrainement, dans lequel
le moteur d'entrainement est un moteur sur moyeu de roue (64), **caractérisé en ce que** le boîtier de batterie est connecté à la partie de charge (12), deux vérins de levage (40, 42) sont pourvus dans le côté extérieur du boîtier de batterie (34) vis-à vis du timon (78) sur une extrémité respective du côté extérieur, et que la tige de piston (50) des vérins de levage (40, 42) pointe vers le dessous et est fixement connectée au cadre de la roue motrice (40), pendant que les enveloppes de vérin sont connectées avec le boîtier de batterie (34) et l'unité hydraulique (38) est aussi montée sur le boîtier de batterie (34) près d'un des deux vérins de levage (40, 42).

2. Chariot élévateur à petite levée selon la revendication 1, **caractérisé en ce que** l'unité d'entrainement est disposée sur l'axe longitudinal du chariot élévateur à petite levée.

3. Chariot élévateur à petite levée selon la revendication 1 ou 2, **caractérisé en ce que** l'axe de pivotement vertical du timon (78) est située à peu près dans une plaine qui passe à travers l'axe longitudinal du chariot élévateur à petite levée.

4. Chariot élévateur à petite levée selon l'une quelconque des revendications 1 à 3, **caractérisé en ce que** un premier pignon à chaîne (72) est debout sur l'axe des paliers de pivotement du timon (78) et un deuxième pignon à chaîne (70) est debout sur une broche qui est debout de façon bloquée contre la rotation dans une ouverture centrale d'un élément de palier (60) pour l'unité d'entrainement, et que une chaîne d'entrainement (78) est nouée autour des pignons à chaîne (72, 70).

5. Chariot élévateur à petite levée selon l'une quelconque des revendications 1 à 4, **caractérisé en ce que** des profils de mât latéraux sont pourvus pour un cadre de levage (100), afin de guider et actionner un autre moyen porte-charge, des moyens d'entrainement pour le deuxième moyen port-charge étant latéralement disposés de même façon.

6. Chariot élévateur à petite levée selon la revendication 5, **caractérisé en ce que** les moyens d'entrainement pour l'autre moyen porte-charge sont des vérins de levage(104).
